# EUROPEAN PATENT APPLICATION

(11) **EP 0 538 227 A1**
(43) Date of publication of application: **21.04.1993**
(21) Application number: 92850244.2
(22) Date of filing: 13.10.1992
(51) Int. Cl.: B23K 9/10

(54) **Welding current source for alternating-current arc welding**

(30) Priority: 14.10.1991 SE 9102961
(71) Applicant: ESAB Aktiebolag, S-402 77 Göteborg (SE)
(72) Inventor: Karlsson, Börje, S-695 32 Laxa (SE); Weman, Klas, S-696 00 Askersund (SE)
(74) Representative: Olsson, Gunnar

(57) **Abstract**

A welding current source for alternating-current arc welding with a controllable inverter (2), the output transformer (5) of which has two separate secondary windings (6, 7), each of which is connected through its welding circuit to a welding location (14, 15). An electronic coupling element unit (12, 13) and an inductor winding (18, 19) is connected into each welding circuit. Both inductor windings are arranged on a common core (20). Immediately before the change in polarity, the inverter (2) is operated by a controller (4) which controls the welding current to a value which, at the instant of changing polarity, is equal to or slightly higher than the minimum current which reliably re-strikes the arc after the change in polarity.

## Description

The invention relates to a welding current source for alternating-current arc welding with an inverter switched on the primary side, which can be controlled by a controller, the output of which inverter consists of a transformer unit with two separate secondary windings arranged to be connected to a welding location jointly formed by an electrode and a workpiece, with a freewheeling diode connected in parallel with each of its secondary windings, and with a rectifier, connected into each welding circuit, in series with an electronic coupling element unit which can be operated by the controller and is arranged to be alternately activated in synchronism with an adjustable frequency for changing the polarity of the welding current, the intensity of which can be adjusted by an adjusting device operating in conjunction with the controller.

In alternating-current arc welding, a very fast zero crossing of the current is required for preventing the arcing pillar from deionising. Re-striking is also suitably supported by impressing an increased voltage between the electrode and the workpiece directly after the zero crossing of the current.

The present invention has the aim of ensuring a re-striking without any particular costly striking arrangements which are made effective after each zero crossing, for example RF generators, arrangements for capacitor discharging. The invention is distinguished by the fact that the welding current source is provided with an inductor, the winding of which is divided by a centre tap into two winding halves, each of which is coupled to its welding circuit, the centre tap being connected to one of the two connections of the welding location. Both welding circuits thus each comprise their inductor winding mounted on a common core. Due to the magnetic coupling between these two winding halves, the current is transferred from one to the other winding half when the polarity changes, that is to say one of the coupling element units is coupled out and the other one is coupled in, since the ampere-turns will not be changed in the first instant. The current change with the change in polarity is not delayed by the inductances of the windings as otherwise holds true for the ripple of the current output from the inverter. The inverter is controlled in known manner by a controller which receives signals which correspond to the actual value and nominal value of the current.

It has been found that a very disturbing current-based noise arises in connection with the zero crossing of the current. According to a preferred embodiment of the invention, the controller is therefore arranged in such a manner that it operates the inverter immediately before the change in polarity with the aim of allowing the current, at the start of the instant of polarity change, to have an intensity which is equal to or slightly higher than the lowest current intensity which will reliably re-strike the arc after the change in polarity. Immediately before the change in polarity, the current intensity is set to a change-over value which is normally lower than the nominal value of the welding current set. The change in polarity itself is initiated when the current intensity has this value, which is 100 A at the most, preferably 50 A at the most. The lower this change-over value is, the less becomes the interfering noise. But the current intensity must never drop below the minimum value which is required for reliable re-striking of the arc. The current intensity set to a low value before the change in polarity also entails low transient voltage loads on the coupling element units.

The invention will now be described in greater detail in connection with the attached drawing, which shows an illustrative embodiment of the same and in which:

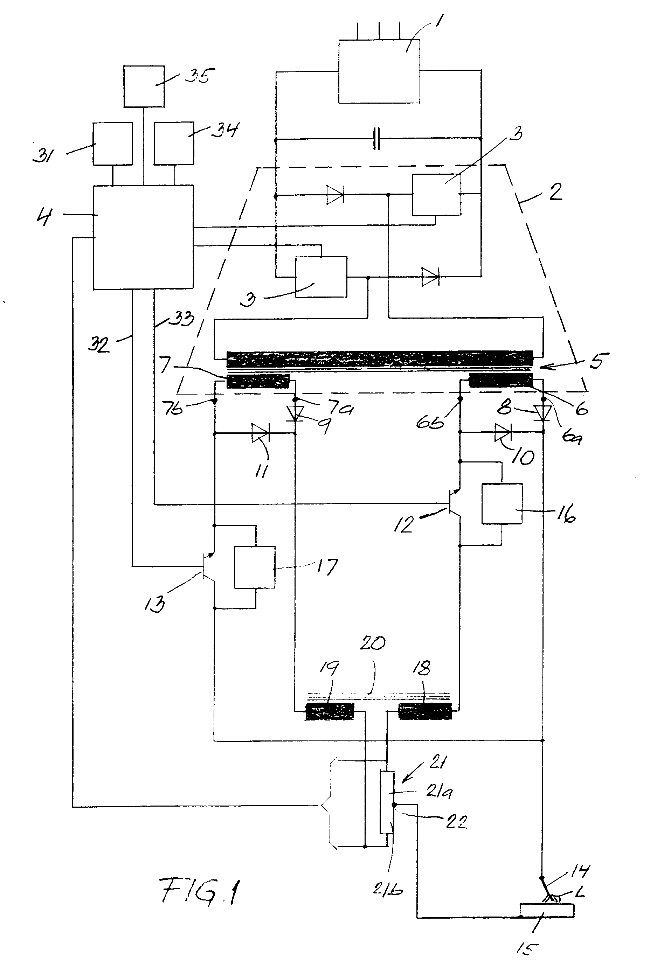

Figure 1 shows a circuit diagram of a welding current source,
Figure 2 shows a circuit of a snubber filter, and
Figure 3a and Figure 3b show the characteristic of the welding current.

A welding current source is provided with a rectifier 1 which can be connected to an alternating-current system, the direct-current output of which is connected to an inverter 2. The electronic coupling element 3 of the inverter, only diagrammatically indicated here, is controlled by a control unit 4. The inverter has an output transformer 5 with two secondary windings 6, 7 with outputs 6a, 6b and 7a, 7b. The inverter is switched on the primary side and the switching frequency is preferably higher than the audio frequency range. The secondary windings 6, 7 are connected through their individual circuits to a welding location with a welding electrode 14 and a workpiece 15. Each of the circuits is provided with its diode 8, 9 for rectifying the voltage output from the secondary winding, with its freewheeling diode 10, 11 connected in parallel with the outputs 6a, 6b; 7a, 7b, and with its transistor 12, 13. Only one transistor is shown here. Due to the high current intensity required for welding, several parallel-connected transistors or special high-power transistor units can be used. Each transistor or transistor group in the present case is connected to the control unit 4. Snubber filters 16, 17 limit the transient overvoltages across transistors 12, 13.

Each welding circuit also comprises two series-connected inductor windings 18, 19. The two windings with the same winding direction have the same number of turns and are mounted on a common iron core 20. The outputs from these windings are each connected to a connection of a measuring shunt 21, the centre tap 22 of which is connected to the workpiece 15. The welding electrode 14 is connected to the outputs 6a, 7b of the secondary winding 6 and, respectively, 7.

In the text below, only one of the two identical snubber filters will be described in greater detail. The snubber filter consists of two circuits connected in parallel with the transistor 12. One circuit comprises an electronic overvoltage protection 23 and a voltage divider formed by two resistors 24, 25. The second circuit comprises a capacitor 26 in series with a parallel-connection which consists, on the one hand, of a series-connection of a thyristor 27 and a resistor 28 and, on the other hand, of a diode 29 and a resistor 30.

During the welding, the frequency of the welding current is determined by the change-over frequency between the two transistors 12, 13. The required frequency is set by means of a frequency adjusting device 31 which is connected to the control unit 4. Corresponding control signals go out from the control unit 4 via lines 32, 33 to the transistors 12, 13. The actual value of the current is sensed by the measuring shunt 21 which outputs a corresponding signal to the control unit 4. The actual value is compared there with a nominal welding current value which is set by means of a current adjusting device 34. The error signal produced is then used for controlling the coupling element 3 in the inverter 2. The current source is also provided with an adjusting device 35 for adjusting the ratio between the length of the positive and negative half waves in one alternating-current period. As is known, it is advantageous, for example in TIG welding of aluminium, that the tungsten electrode is negative for a longer period than positive.

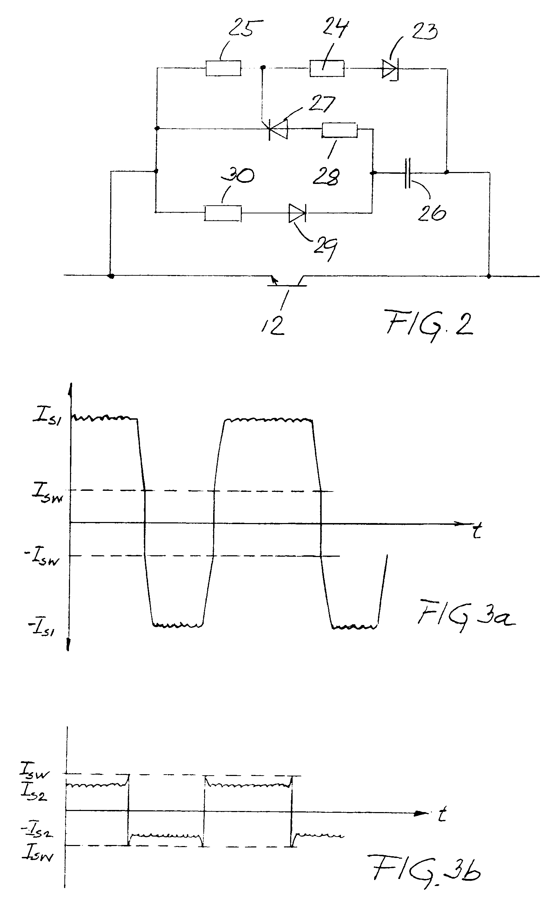

When the transistor 12 conducts, the circuit is closed which comprises the secondary winding 6, the diode 8, the electrode 14, arc L, workpiece 15, one half 21a of the measuring shunt 21, the inductor winding 18 and transistor 12. The current output from the inverter 2, which preferably has a frequency above the audio frequency range, that is to say above approximately 16 kHz, is rectified in the diode 8. With a given value of the welding current set by means of the current adjusting device 34 and a given frequency, adjusted by means of the frequency adjusting device 31, of the welding current, a current variation is obtained which is shown in Figure 3a. Two separate current values are marked by Iₛ₁ and I_{sw}, respectively. The inverter current rectified in the diode 8 is smoothed in the inductor winding 18 so that only an insignificant ripple corresponding to the switching frequency of the inverter remains.

Before the one transistor 12 is cut off and the other transistor 13 is opened for producing the desired change in polarity, the current Iₛ₁ is reduced to a value I_{sw}. The current I_{sw} is generally considerably lower than the welding current. The value of the latter is essentially determined by the requirement that the current should be sufficiently high for reliable re-striking after the change in polarity. By reducing the current Iₛ₁ immediately before the change in polarity, the noise arising with the change in polarity is considerably reduced. Moreover, the transient voltage loading of the transistors is also reduced. The adjustment of the current I_{sw} occurs automatically in the control unit 4 by action of the coupling element 3. Either the current is controlled to a set value of I_{sw} or the output current of the inverter is controlled to zero and the change in polarity is initiated when the current then flowing through the freewheeling diode has been reduced to the value I_{sw}. The welding current is sensed by the measuring shunt 21 and the control unit outputs a signal for changing polarity to the two transistors when the current intensity is I_{sw}. On changing polarity, the current flows from the one inductor winding 18 to the other inductor winding 19 since the ampere turns are not changed in the first instant. On changing polarity, there is therefore no delay of the current variation caused by the inductance of the windings 18, 19. The zero crossing occurs in a very short time and the re-striking of the arc occurs virtually with the same current I_{sw}. In connection with the change in polarity, it can also be suitable to support the re-striking by briefly strongly driving the inverter to an increased voltage.

It has been found that the current I_{sw} should not be greater than 100 A for the noise generated when changing polarity to be acceptable. For currents below 50 A, this noise usually disappears among noise from other interference sources. A prerequisite is, however, that the current I_{sw} should not be less than the limit value for which a re-striking is ensured. This limit value can be determined empirically from case to case. However, it is frequently simpler to select a value for I_{sw} which applies to most operational cases during welding. The value of I_{sw} is suitably set in the control unit.

In certain cases, it is possible that the welding current is lower than the current I_{sw} required for reliable re-striking. In such a case, which is shown in Figure 3b, the current Iₛ₂ must be increased to the required intensity I_{sw} before changing polarity, which is done by suitably controlling the inverter with the aid of the control unit 4. After the re-striking, the current is then quickly controlled to the welding current value Iₛ₂.

Functions of the control unit can be implemented through analog circuits or through algorithms. A suitable analog switching arrangement or a fitting algorithm which controls the current variation in accordance with the current variation described in connection with Figures 3a and 3b can be easily designed by an expert.

The snubber filter prevents the occurrence of damaging transient voltage peaks across the transistor. When the transistor 12 is cut off, the voltage across the transistor rises due to the inductance of the circuit. However, the snubber filter does not operate before the voltage across the transistor has reached a value which corresponds to the breakdown voltage of the electronic overvoltage protection 23. As soon as the current flows through the overvoltage protection 23, the thyristor 27 is fired and a charging current flows through the capacitor 26 and the resistor 28. The voltage across the transistor is thus limited to the breakdown voltage of the overvoltage protection 23. When the second transistor 13 is conducting, the capacitor 26 remains charged until the transistor 12 again becomes conducting when the capacitor is discharged through the resistor 30 via diode 29. By the snubber filter being first activated when the transient voltage across the transistor exceeds a given value, the current change dI/dt for the welding current is not influenced and a fast zero crossing is obtained with very good preconditions for re-striking the arc. When the transistor 12 is cut off, a voltage is induced in both inductor windings 18 and 19. When then the transistor 13 is opened, the sum of the voltage across the secondary winding 7 and the inductor winding 19 is impressed on the still ionised air gap between the electrode 14 and the workpiece 15. This increased voltage supports the re-striking of the arc after the zero crossing of the current. This process is repeated alternately between the transistors in synchronism with the welding current frequency.

Should, for some reason not wanted in itself, both transistors become conducting for a short time during the process of changing polarity, a short circuit occurs, as a result of which both inductor windings will be connected in series. However, the short circuit current is immediately limited to a value which is equal to I_{sw}/2 due to the doubling of the number of winding turns connected on the inductor whilst the number of ampere turns is retained. Since the same current flows through both halves 21a and 21b of the shunt, the current regulator will also limit the current to this value.

The current source shown can be converted in a simple manner for direct-current operation by setting the pole changing frequency to zero. Depending on the required polarity at the welding location, only one transistor is continuously connected in circuit.

## Claims

1. Welding current source for alternating-current arc welding with an inverter (2) switched on the primary side, which can be controlled by a controller (4), the output of which inverter consists of a transformer unit (5) with two separate secondary windings (6, 7) arranged to be connected to a welding location jointly formed by an electrode (14) and a workpiece (15), with a freewheeling diode (10, 11) connected in parallel to each of its secondary windings, and with a rectifier (8, 9), connected into each welding circuit, in series with an electronic coupling element unit (12, 13) which can be operated by the controller and is arranged to be alternately activated in synchronism with an adjustable frequency for changing the polarity of the welding current, the intensity of which can be adjusted by an adjusting device (3, 4) operating in conjunction with the controller, characterised in that the welding current source is provided with an inductor, the winding of which is divided into two winding halves (18, 19) by a centre tap, each of which is connected to its welding circuit, the centre tap being connected to one of the two connections of the welding location.

2. Welding current source according to Claim 1 or 2, characterised in that the controller (4) is arranged to operate the inverter immediately before the change of polarity with the aim of allowing the welding current, at the instant of changing polarity, to have a value which is equal to or slightly higher than the lowest current intensity which reliably re-strikes the arc after the change in polarity.

3. Welding current source according to Claim 2, characterised in that the current is 100 A maximum on initiation of the change in polarity.

4. Welding current source according to Claim 3, characterised in that the current is 50 A maximum on initiation of the change in polarity.

5. Welding current source according to any of Claims 1 to 4, characterised in that each of the coupling element units (12; 13) is connected in parallel with its snubber filter (16; 17), arranged to be activated when the voltage across the coupling element units exceeds a given value.

6. Welding current source according to Claim 5, characterised in that the snubber filter is provided with an electronic overvoltage protection (23), which is connected in parallel with the coupling element unit (12; 13), with a breakdown voltage corresponding to the said voltage, and with a coupling member (27) for connecting a charging circuit (26, 28) via the coupling element units, which coupling member is arranged to be activated by a signal which corresponds to the breakdown voltage across the diode (23).
